# EUROPÄISCHE PATENTSCHRIFT

(11) **EP 2 040 967 B1**
(45) Veröffentlichungstag und Bekanntmachung des Hinweises auf die Patenterteilung: **02.12.2009**
(21) Anmeldenummer: 07728987.4
(22) Anmeldetag: 10.05.2007
(51) Int. Cl.: B60T 17/02, B60T 13/52

(54) **VERFAHREN ZUM BEREITSTELLEN VON UNTERDRUCK EINER BREMSBETÄTIGUNGSVORRICHTUNG EINER KRAFTFAHRZEUGBREMSANLAGE**
A METHOD FOR CREATING LOW PRESSURE IN A BRAKE ACTIVATION DEVICE OF A MOTOR VEHICLE BRAKE SYSTEM
PROCÉDÉ DE MISE À DISPOSITION D'UNE DÉPRESSION D'UN DISPOSITIF D'ACTIONNEMENT DE FREIN D'UN SYSTÈME DE FREINAGE DE VÉHICULE AUTOMOBILE

(30) Priorität: 06.07.2006 DE 102006031632; 29.09.2006 DE 102006046478
(43) Veröffentlichungstag der Anmeldung: 01.04.2009
(73) Patentinhaber: Continental Teves AG & Co. oHG, 60488 Frankfurt (DE)
(72) Erfinder: SCHONLAU, Jürgen, 65396 Walluf (DE); RÜFFER, Manfred, 65843 Sulzbach (DE); KRÄMER, Horst, 65462 Ginsheim-Gustavsburg (DE); JÜRGING, Michael, 65779 Kelkheim (DE)
(86) Internationale Anmeldenummer: PCT/EP2007/054535
(87) Internationale Veröffentlichungsnummer: WO 2008/003547

(56) Entgegenhaltungen:
- EP-A- 1 538 307
- EP-A- 1 681 219
- EP-A1- 0 553 010
- EP-A1- 1 123 848
- WO-A-2005/123476
- DE-A1- 19 929 880

## Beschreibung

Die Erfindung betrifft ein Verfahren zum Bereitstellen von Unterdruck einer Bremsbetätigungsvorrichtung einer Kraftfahrzeugbremsanlage umfassend einen pneumatischen Bremskraftverstärker, dessen Innenraum in wenigstens eine Unterdruckkammer und eine Arbeitskammer unterteilt ist, einen Hauptbremszylinder sowie ein pneumatisches Motor-Pumpenaggregat zur Bereitstellung des Unterdrucks in der Unterdruckkammer, welches eine Unterdruckpumpe und einen die Unterdruckpumpe antreibenden Motor umfasst, wobei ein Unterdruckniveau in der Unterdruckkammer bzw. ein Druckunterschied zwischen der Unterdruckkammer und der Arbeitskammer mittels eines Sensors erfasst wird und das Motor-Pumpenaggregat durch eine elektronischen Steuereinheit bei Unterschreiten eines ersten bestimmten, unteren Unterdruckniveaus in der Unterdruckkammer eingeschaltet und bei Erreichen eines zweiten bestimmten, oberen Unterdruckniveaus ausgeschaltet wird.

Ein derartiges Verfahren ist beispielsweise aus der DE 199 29 880 A1 bekannt, wobei die darin beschriebene Unterdruckpumpe als Unterdruck-Hilfspumpe vorgesehen ist, die bedarfsweise dem Verbrennungsmotor als Haupt-Unterdrucklieferant abhängig von dessen Betriebeszuständen zugeschaltet wird.

Durch die vermehrte Verwendung regenerativer Bremssysteme basierend auf einem fahrerunabhängig ansteuerbaren Bremskraftverstärker, die beispielsweise in Hybridfahrzeugen mit einem Elektromotor und einem Verbrennungsmotor Verwendung finden, ergeben sich jedoch bei diesen Fahrzeugen Betriebszustände, bei denen der Verbrennungsmotor kein Unterdruck für die Bremsbetätigungsvorrichtung liefert.

Ferner muss insbesondere bei reinen Elektrofahrzeugen der benötigte Druck allein über eine solche Unterdruckpumpe erzeugt werden.

Üblicherweise erfolgt die Aktivierung des Motor-Pumpenaggregats bei Unterschreiten eines ersten bestimmten, unteren Unterdruckniveaus (ca. 0,6 bar Unterdruck, d.h. 0,4 bar absolut) in der Unterdruckkammer. Bei Erreichen eines zweiten bestimmten, oberen Unterdruckniveaus (ca. 0,8 bar Unterdruck, d.h. 0,2 bar absolut) wird das Motor-Pumpenaggregat ausgeschaltet, um die Belastungen des Motor-Pumpenaggregats zu reduzieren und damit dessen Lebenszeit zu verlängern.

Versuche haben jedoch gezeigt, dass bei der Verwendung der Unterdruckpumpe als alleiniger Unterdruck-Lieferant der so genannte Aussteuerpunkt des Bremskraftverstärkers, in welchem die maximale Verstärkung der Betätigungskraft vorliegt und ein weiterer Druckaufbau nur durch eine zur Ausgangskraft gleich hohe Steigung der Eingangskraft möglicht ist, durch die Volumenreduzierung der Unterdruckkammer im Betrieb sehr viel niedriger sein kann als bei einem Verbrennungsmotor als Unterdruck-Lieferant.

Dokument WO 2005/123 476 A offenbart ein Verfahren mit den Merkmalen des Oberbegriffs des Anspruchs 1.

Es gilt daher ein Verfahren für die Problematik anzubieten, bei Verwendung einer Unterdruckpumpe als alleiniger oder temporär alleiniger Unterdruck-Lieferant eine adäquate Leistung des Bremskraftverstärkers sicherzustellen.

Zur Lösung dieser Aufgabe wird ein Verfahren vorgeschlagen, dessen Besonderheit darin besteht, dass das erste bestimmte, untere Unterdruckniveau und das zweite bestimmte, obere Unterdruckniveau in der Unterdruckkammer abhängig von einer Geschwindigkeit des Fahrzeuges gesteuert wird. Mit anderen Worten erfolgt eine Einstellung des ersten bzw. zweiten Unterdruckniveaus, bei welchem das Motor-Pumpenaggregat ein- bzw. ausgeschaltet wird, in Abhängigkeit von der Geschwindigkeit des Fahrzeuges. Damit ist es möglich, das Unterdruckniveau in der Unterdruckkammer des Bremskraftverstärkers insbesondere bei bremswegkritischen Geschwindigkeiten zu erhöhen. Der Aussteuerpunkt des Bremskraftverstärkers entspricht dem eines Bremskraftverstärkers mit einem Verbrennungsmotor als Unterdrucklieferant.

Gemäß einer vorteilhaften Ausbildung des erfindungsgemäßen Verfahrens wird das erste bestimmte, untere Unterdruckniveau in einem niedrigen Geschwindigkeitsbereich des Fahrzeuges abgesenkt, wodurch die Anzahl der Lastzyklen des Motor-Pumpenaggregates reduziert werden kann.

Vorzugsweise wird das zweite bestimmte, obere Unterdruckniveau über einer bestimmten Geschwindigkeit des Fahrzeuges angehoben wird. Dadurch wird das Unterdruckniveau in der Unterdruckkammer des Bremskraftverstärkers insbesondere bei bremskritischen Geschwindigkeiten erhöht.

Wird die Ausschaltfunktion des Motor-Pumpenaggregats über der bestimmten Geschwindigkeit des Fahrzeuges mit einer Zeitsteuerung kombiniert, kann verhindert werden, dass das Motor-Pumpenaggregat bei Nichterreichen des Ausschaltdruckes dauerläuft.

Weitere Merkmale, Vorteile und Anwendungsmöglichkeiten des erfindungsgemäßen Verfahrens gehen aus den Unteransprüchen und der nachfolgenden Beschreibung eines Ausführungsbeispiels sowie anhand der Zeichnung hervor.

Es zeigt:
- Figur 1: einen schematischen Systemaufbau einer Bremsbetätigungsvorrichtung einer Kraftfahrzeugbremsanlage zur Durchführung des erfindungsgemäßen Verfahrens und
- Figur 2: ein Geschwindigkeits-Druck-Diagramm der Bremsbetätigungsvorrichtung gemäß Fig. 1.1.

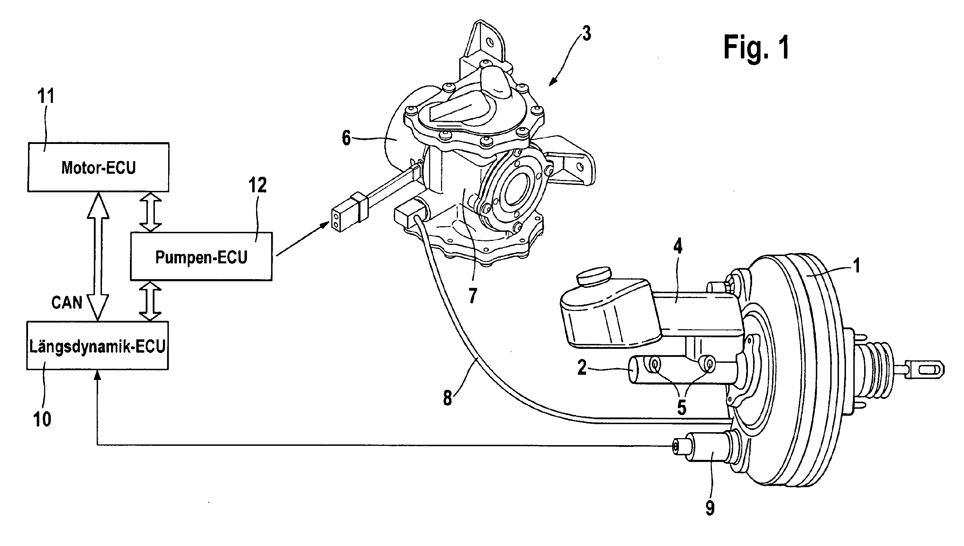

Fig. 1 zeigt einen schematischen Systemaufbau einer Bremsbetätigungsvorrichtung einer Kraftfahrzeugbremsanlage.

Es ist ersichtlich, dass die Bremsbetätigungsvorrichtung zur Durchführung des erfindungsgemäßen Verfahrens einen pneumatischen Bremskraftverstärker 1, einen daran angeordneten Hauptbremszylinder 2 sowie ein pneumatisches Motor-Pumpenaggregat 3 umfasst. Da der grundsätzliche Aufbau und die Funktion der Bremsbetätigungsvorrichtung allgemein bekannt sind, werden nachstehend nur die erfindungswesentlichen Merkmale beschrieben.

Die Fahrzeugbremsanlage ist beispielsweise vom Typ "Brakeby-wire" und ist fahrerwunschabhängig mittels einer elektronischen Steuereinheit (ECU), d.h. fahrerunabhängig, als auch teilweise mittels eines nicht dargestellten Bremspedals (mechanische Rückfallebene) betätigbar.

Ein nicht gezeigter Innenraum des Bremskraftverstärkers 1 wird durch wenigstens eine bewegliche Wand in wenigstens eine Unterdruckkammer und wenigstens eine Arbeitskammer unterteilt. Der Hauptbremszylinder 2 weist zwei in einem Gehäuse verschiebbare, nicht gezeigte Kolben auf, welche zusammen mit dem Gehäuse jeweils einen hydraulischen Druckraum begrenzen. Die Druckräume sind mit einem drucklosen Druckmittelbehälter 4 und über Ausgänge 5 mit nicht dargestellten Radbremsen der Kraftfahrzeugbremsanlage verbindbar.

Das Motor-Pumpenaggregat 3 umfasst eine Unterdruckpumpe 6, die beispielsweise als Membran- oder Kolbenpumpe ausgeführt ist, und einen die Unterdruckpumpe 6 antreibenden Elektromotor 7. Um dem Bremskraftverstärker 1 Unterdruck bereitzustellen, ist die Unterdruckpumpe 6 über eine Saugleitung 8 mit der nicht dargestellten Unterdruckkammer des Bremskraftverstärkers 1 verbunden. Ein an dem Bremskraftverstärker 1 oder der Unterdruckpumpe 6 angeordneter Vakuumsensor 9 erfasst ein Unterdruckniveau P in der Unterdruckkammer bzw. eine Druckdifferenz zwischen Unterdruckkammer und Arbeitskammer, wobei dieser erfasste Druck in einer elektronischen Längsdynamik-Steuereinheit (Längsdynamik-ECU) 10 ausgewertet wird. Der Vakuumsensor 9 kann im Rahmen der Erfindung auch in der Saugleitung 8 angeordnet sein.

Die Längsdynamik-Steuereinheit 10, welche neben dem Drucksignal des Vakuumsensors 9 auch ein Geschwindigkeitssignal von nicht gezeigten Raddrehzahlsensoren erfasst und damit eine Geschwindigkeit v des Fahrzeuges, kann über einen Bussystem CAN (Controller Area Network) mit einer elektronischen Motor-Steuereinheit (Motor-ECU) 11, einer Pumpen-Steuereinheit (Pumpen-ECU) 12, welche das Motor-Pumpenaggregat 3 ansteuert, sowie einer nicht dargestellten, grundsätzlich bekannten ABS-Steuereinheit (ABS-ECU) oder ESP-Steuereinheit (ESP-ECU) verbunden sein. Es ist ebenfalls denkbar, das Motor-Pumpenaggregat 3 ohne eine separate Pumpen-ECU 12 mittels der Längsdynamik-ECU 10 bzw. der ABS-ECU oder ESP-ECU anzusteuern.

Die Motor-ECU 11 erfasst ein Drehzahlsignal einer oder mehreren nicht gezeigten Antriebseinheiten (Motor) des Fahrzeuges. Damit ist es zusätzlich möglich, beispielsweise eine Drehzahl des Motor-Pumpenaggregats 3 abhängig von den Fahrzuständen des Fahrzeuges zu steuern, um störende Geräusche des Motor-Pumpenaggregates 3 zu minimieren, die insbesondere vor oder während einer Startphase des Fahrzeuges bzw. des Fahrzeugantriebes als störend empfunden werden, da noch keine Fahrgeräusche vorhanden sind.

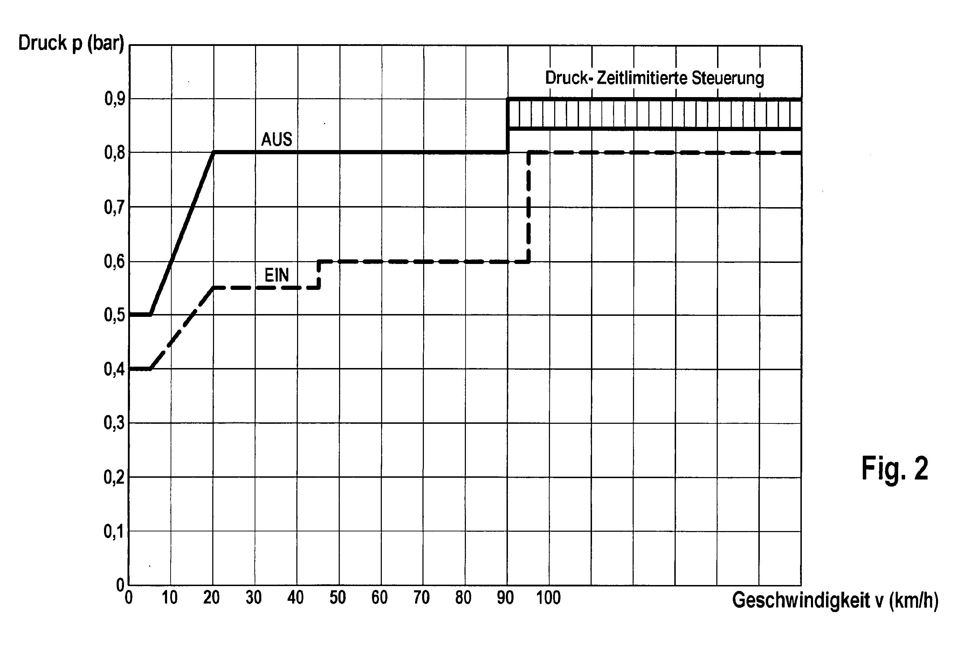

Fig. 2 zeigt Geschwindigkeits-Druck-Diagramm der Bremsbetätigungsvorrichtung gemäß Fig. 1. Wie aus der gestrichelten Linie in Fig. 2 ersichtlich ist, erfolgt die Aktivierung des Motor-Pumpenaggregats 3 in einem niedrigen Geschwindigkeitsbereich der Geschwindigkeit v des Fahrzeuges - beispielsweise zwischen 20 km/h und 45 km/h bei Unterschreiten eines ersten bestimmten, unteren Unterdruckniveaus Pe von beispielsweise 0,55 bar Unterdruck in der Unterdruckkammer. Das heißt, die Einschaltschwelle wird im Vergleich zum bekannten, üblichen Wert von 0,6 bar Unterdruck abgesenkt.

Wie Fig. 2 weiter zu entnehmen ist, liegt die Einschaltschwelle im Stand des Fahrzeuges bei 0,4 bar und die Ausschaltschwelle ist beispielsweise auf 0,5 bar festgelegt.

Durch das Herabsetzen der Ein- und Ausschaltschwellen im Stand und in einem niedrigen Geschwindigkeitsbereich kann die Anzahl der Lastzyklen des Motor-Pumpenaggregates 3 erheblich reduziert werden.

Zwischen 45 km/h und 95 km/h erfolgt die Aktivierung bei den üblichen 0,6 bar Unterdruck. Über 95 km/h wird das Motor-Pumpenaggregat 3 bei einem Druck von 0,8 bar Unterdruck eingeschaltet. Das Unterdruckniveau P in der Unterdruckkammer des Bremskraftverstärkers wird damit insbesondere bei bremswegkritischen Geschwindigkeiten v erhöht, wodurch der Aussteuerpunkt des Bremskraftverstärkers dem eines Bremskraftverstärkers mit einem Verbrennungsmotor als Unterdrucklieferant entspricht.

Durch diese geschwindigkeitsabhängige Steuerung des Motor-Pumpenaggregates 3 wird die kritische Anzahl der Lastzyklen und die Gesamtlaufzahl der Unterdruckpumpe 6 bzw. des Motor-Pumpenaggregates 3 gegenüber der herkömmlichen Ein/Aus-Steuerung nicht erhöht.

Ferner kann die Ausschaltfunktion des Motor-Pumpenaggregates 3 über einer bestimmten Geschwindigkeit vₙ, beispielsweise 90 km/h, mit einer Zeitsteuerung von beispielsweise maximal 5 sec. Laufzeit kombiniert werden, wie aus Fig. 2 ersichtlich ist. Dadurch kann die Ausschaltschwelle des Motor-Pumpenaggregates 3 auf 0,9 bar Unterdruck angehoben werden, wobei durch die Zeitsteuerung verhindert wird, dass das Motor-Pumpenaggregat 3 im Falle des Nichterreichens des Aus-Schaltdruckes dauerläuft.

### Bezugszeichenliste

- 1: Bremskraftverstärker
- 2: Hauptbremszylinder
- 3: Motor-Pumpenaggregat
- 4: Druckmittelbehälter
- 5: Ausgang
- 6: Unterdruckpumpe
- 7: Elektromotor
- 8: Saugleitung
- 9: Vakuumsensor
- 10: Längsdynamik-Steuereinheit
- 11: Motor-Steuereinheit
- 12: Pumpen-Steuereinheit

- P: Unterdruckniveau
- Pa: oberes Unterdruckniveau
- Pe: unteres Unterdruckniveau
- v: Geschwindigkeit des Fahrzeuges
- Vₙ: bestimmte Geschwindigkeit des Fahrzeuges

## Patentansprüche

1. Verfahrens zum Bereitstellen von Unterdruck einer Bremsbetätigungsvorrichtung einer Kraftfahrzeugbremsanlage umfassend einen pneumatischen Bremskraftverstärker (1), essen Innenraum in wenigstens eine Unterdruckkammer und eine Arbeitskammer unterteilt ist, einen Hauptbremszylinder (2) sowie ein pneumatisches Motor-Pumpenaggregat (3) zur Bereitstellung des Unterdrucks in der Unterdruckkammer, welches eine Unterdruckpumpe (6) und einen die Unterdruckpumpe (6) antreibenden Motor (7) umfasst, wobei ein Unterdruckniveau (P) in der Unterdruckkammer bzw. ein Druckunterschied zwischen der Unterdruckkammer und der Arbeitskammer mittels eines Sensors (9) erfasst wird und das Motor-Pumpenaggregat (3) durch eine elektronische Steuereinheit (12) bei Unterschreiten eines ersten bestimmten, unteren Unterdruckniveaus (Pe) in der Unterdruckkammer eingeschaltet und bei Erreichen eines zweiten bestimmten, oberen Unterdruckniveaus (Pa) ausgeschaltet wird, **dadurch gekennzeichnet, dass** das erste bestimmte, untere Unterdruckniveau (Pe) und das zweite bestimmte, obere Unterdruckniveau (Pa) in der Unterdruckkammer abhängig von einer Geschwindigkeit (v) des Fahrzeuges gesteuert wird.

2. Verfahren nach Anspruch 1, **dadurch gekennzeichnet, dass** das erste bestimmte, untere Unterdruckniveau (Pe) in einem niedrigen Geschwindigkeitsbereich des Fahrzeuges abgesenkt wird.

3. Verfahren nach Anspruch 1 oder 2, **dadurch gekennzeichnet, dass** das zweite bestimmte, obere Unterdruckniveau (Pa) über einer bestimmten Geschwindigkeit (Vₙ) des Fahrzeuges angehoben wird.

4. Verfahren nach Anspruch 3, **dadurch gekennzeichnet, dass** die Ausschaltfunktion des Motor-Pumpenaggregats (3) über der bestimmten Geschwindigkeit (Vₙ) des Fahrzeuges mit einer Zeitsteuerung kombiniert ist.

5. Verfahren nach Anspruch 3 oder 4, **dadurch gekennzeichnet, dass** das Motor-Pumpenaggregat (3) von einer elektronischen Pumpen-Steuereinheit (12) angesteuert wird, welche mittels eines Bussystem mit einer elektronischen Längsdynamik-Steuereinheit (10) des Fahrzeuges in Verbindung steht.

6. Verfahren nach Anspruch 3 oder 4, **dadurch gekennzeichnet, dass** das Motor-Pumpenaggregat (3) von einer elektronischen Längsdynamik-Steuereinheit (10) des Fahrzeuges angesteuert wird.

7. Verfahren nach Anspruch 3 oder 4, **dadurch gekennzeichnet, dass** das Motor-Pumpenaggregat (3) von einer elektronischen ABS- oder ESP-Steuereinheit angesteuert wird, welche mittels eines Bussystem mit einer elektronischen Längsdynamik-Steuereinheit (10) des Fahrzeuges in Verbindung steht.

## Claims

1. Method for creating low pressure in a brake activation device of a motor vehicle brake system, comprising a pneumatic brake force booster (1) the interior of which is divided into at least one low-pressure chamber and one working chamber, a brake master cylinder (2) and a pneumatic motor pump unit (3) for creating the low pressure in the low-pressure chamber, which motor pump unit (3) comprises a low-pressure pump (6) and a motor (7) driving the low-pressure pump (6), a low-pressure level (P) in the low-pressure chamber or a pressure difference between the low-pressure chamber and the working chamber being detected by means of a sensor (9) and the motor pump unit (3) being switched on by an electronic control unit (12) if the pressure falls below a first predefined, lower low-pressure level (Pe) in the low-pressure chamber and being switched off if a second predetermined, upper low-pressure level (Pa) is reached, **characterized in that** the first predefined, lower low-pressure level (Pe) and the second predefined, upper low-pressure level (Pa) in the low-pressure chamber are controlled as a function of a speed (v) of the vehicle.

2. Method according to Claim 1, **characterized in that** the first predefined, lower low-pressure level (Pe) is lowered in a low speed range of the vehicle.

3. Method according to Claim 1 or 2, **characterized in that** above a predefined speed (vₙ) of the vehicle the second predefined, upper low-pressure level (Pa) is raised.

4. Method according to Claim 3, **characterized in that** the switch-off function of the motor pump unit (3) above the predefined speed (vₙ) of the vehicle is combined with a time control system.

5. Method according to Claim 3 or 4, **characterized in that** the motor pump unit (3) is controlled by an electronic pump control unit (12) which is connected by means of a bus system to an electronic longitudinal dynamics control unit (10) of the vehicle.

6. Method according to Claim 3 or 4, **characterized in that** the motor pump unit (3) is controlled by an electronic longitudinal dynamics control unit (10) of the vehicle.

7. Method according to Claim 3 or 4, **characterized in that** the motor pump unit (3) is controlled by an electronic ABS or ESP control unit which is connected by means of a bus system to an electronic longitudinal dynamics control unit (10) of the vehicle.

## Revendications

1. Procédé pour fournir une dépression dans un dispositif d'actionnement de frein d'une installation de freinage d'un véhicule automobile, comprenant un amplificateur de force de freinage pneumatique (1), dont l'espace interne est divisé en au moins une chambre de dépression et une chambre de travail, un cylindre de frein principal (2) ainsi qu'un auxiliaire de pompe de moteur pneumatique (3) pour fournir la dépression dans la chambre de dépression, qui comprend une pompe à dépression (6) et un moteur (7) entraînant la pompe à dépression (6), un niveau de dépression (P) dans la chambre de dépression ou une différence de pression entre la chambre de dépression et la chambre de travail étant détecté(e) au moyen d'un capteur (9) et l'auxiliaire de pompe de moteur (3) étant enclenché par une unité de commande électronique (12) si un premier niveau de dépression inférieur déterminé (Pe) dans la chambre de dépression n'est pas atteint, et étant coupé une fois que l'on a atteint un deuxième niveau de dépression supérieur déterminé (Pa), **caractérisé en ce que** le premier niveau de dépression inférieur déterminé (Pe) et le deuxième niveau de dépression supérieur déterminé (Pa) dans la chambre de dépression sont commandés en fonction d'une vitesse (v) du véhicule.

2. Procédé selon la revendication 1, **caractérisé en ce que** le premier niveau de dépression inférieur déterminé (Pe) est réduit dans une plage de vitesse inférieure du véhicule.

3. Procédé selon la revendication 1 ou 2, **caractérisé en ce que** le deuxième niveau de dépression supérieur déterminé (Pa) est augmenté au-dessus d'une vitesse déterminée (Vₙ) du véhicule.

4. Procédé selon la revendication 3, **caractérisé en ce que** la fonction de coupure de l'auxiliaire de pompe de moteur (3) au-dessus de la vitesse déterminée (Vₙ) du véhicule est combinée à une commande temporelle.

5. Procédé selon la revendication 3 ou 4, **caractérisé en ce que** l'auxiliaire de pompe de moteur (3) est commandé par une unité de commande de pompe électronique (12), qui est en liaison avec une unité de commande dynamique de longueur électronique (10) du véhicule au moyen d'un système de bus.

6. Procédé selon la revendication 3 ou 4, **caractérisé en ce que** l'auxiliaire de pompe de moteur (3) est commandé par une unité de commande dynamique de longueur électronique (10) du véhicule.

7. Procédé selon la revendication 3 ou 4, **caractérisé en ce que** l'auxiliaire de pompe de moteur (3) est commandé par une unité de commande électronique ABS ou ESP, qui est en liaison au moyen d'un système de bus avec une unité de commande dynamique de longueur électronique (10) du véhicule.
